# EUROPEAN PATENT APPLICATION

(11) **EP 2 011 406 A1**
(43) Date of publication of application: **07.01.2009**
(21) Application number: 08017453.5
(22) Date of filing: 14.11.2005
(51) Int. Cl.: A23L 2/38, A23F 5/24, A23L 2/40, A23L 2/60

(54) **Coffee cola beverage composition**

(30) Priority: 21.06.2005 US 157156
(62) Divisional of application: 05257013.2
(71) Applicant: The Coca-Cola Company, Atlanta, GA 30313 (US)
(72) Inventor: Simpson, Tyler, Smyrna, Georgia 30080 (US); Sepcic, Kelly, Mabelton, Georgia 30126 (US); Major, Charles, Decatur, Georgia 30035 (US); Hays, Eddie, R., Marietta, Georgia 30068 (US)
(74) Representative: Towler, Philip Dean

(57) **Abstract**

A coffee cola beverage composition comprising soluble coffee solids in the range of 0.05% w/v to 0.50% w/v. The beverage may be full calorie, reduced calorie or no calorie, sweetened with natural sweeteners, artificial sweeteners, or combinations thereof. The use of soluble coffee solids in this range produces a product with pleasant coffee aroma, a delicious coffee/cola flavour blend, smooth mouthfeel and a foamy yet manageable head.

## Description

### BACKGROUND OF THE INVENTION

This invention relates to the field of beverages, particularly carbonated cola beverage compositions comprising soluble coffee solids.

Beverage formulators have long sought to combine the popular tastes of coffee and carbonated cola beverages into a single beverage featuring the best qualities of both. Prior attempts at producing a tasty coffee cola beverage have included mixing coffee with cola, adding coffee flavoring to cola beverages, adding coffee extract to cola beverages and adding coffee solids to cola beverages.

Despite the popularity of coffees and colas, the strong interest in a beverage having the combined flavors of coffee and cola, and the best efforts of the beverage industry, no coffee cola beverage introduced to-date has successfully combined the elements of coffee and cola to produce a tasty, packageable beverage that has had any long term widespread success in the marketplace. In short, none of the prior art coffee cola beverages have tasted very good, and almost all of them have been discontinued.

### BRIEF SUMMARY OF THE INVENTION

It is an object of the invention to provide a coffee cola beverage that features the best qualities of coffee and cola beverages and that has a dramatically improved taste as compared to prior art coffee cola beverages. In accordance with this aspect of the invention, there is provided a newly discovered coffee cola beverage composition having a pleasant and impactful coffee aroma, smooth mouthfeel, foamy and stable head and a surprisingly delicious coffee cola flavor. This unexpectedly good taste results from the use of soluble coffee solids in the range of 0.05% w/v to 0.50% w/v added to a carbonated cola beverage.

Accordingly, it is a further object of the invention to provide a coffee cola beverage having coffee solids in an amount equal or greater than 0.05% w/v, and less than or equal to 0.50% w/v. The use of soluble coffee solids outside this range, or the use of coffee flavorings, do not produce a flavor that approaches the delicious taste resulting from the use of coffee solids in the aforementioned range, nor do they otherwise indicate or suggest that such a delicious flavor would be obtained upon the use of coffee solids in this range.

It is a further object of the invention to provide a full calorie, naturally sweetened coffee cola beverage having soluble coffee solids in the range of 0.05% w/v to 0.50% w/v. According to a related object of the invention, there is provided a naturally sweetened coffee cola beverage containing sugar in the range of 6.0% w/v to 11.0% w/v and soluble coffee solids in the range of 0.05% w/v to 0.50% w/v.

There is also provided according to the invention a mid calorie coffee cola beverage having soluble coffee solids in the range of 0.05% w/v to 0.50% w/v and comprising a mixture of natural and artificial sweeteners. According to a related object of the invention, there is provided a naturally and artificially sweetened coffee cola beverage containing sugar in the range of 2.0 % w/v to 6.0% w/v , and one or more artificial sweeteners in the range of 0.005% w/v to 0.06% w/v and soluble coffee solids in the range of 0.05% w/v to 0.50% w/v. In addition to other advantages, the mid calorie coffee cola beverage delivers a taste profile with a noticeably diminished aftertaste than that typically associated with beverages containing artificial sweeteners.

A zero or near zero calorie coffee cola beverage is also provided according to the invention, having soluble coffee solids in the range of 0.05% w/v to 0.50% w/v and comprising only non-calorie artificial sweeteners. According to a related object of the invention, there is provided a naturally and artificially sweetened coffee cola beverage containing one or more artificial sweeteners in the range of 0.020% w/v to 0.06% w/v and soluble coffee solids in the range of 0.05% w/v to 0.50% w/v. In addition to other advantages, the zero or near zero calorie coffee cola beverage delivers à taste profile with a noticeably diminished aftertaste than that typically associated with beverages containing artificial sweeteners.

The unexpectedly delicious coffee cola taste according to the invention may be provided by adding soluble coffee solids in the range of 0.05% w/v to 0.50% w/v to a fully carbonated or partially carbonated cola beverage. Therefore, it is a further object of the invention to provide a fully carbonated cola beverage to which has been added soluble coffee solids in the range of 0.05% w/v to 0.50% w/v to produce a fully carbonated coffee cola beverage. It is another object of the invention to provide a partially carbonated cola beverage to which has been added soluble coffee solids in the range of 0.05% w/v to 0/50% w/v to produce a partially carbonated coffee cola beverage.

### DETAILED DESCRIPTION OF THE INVENTION

The coffee cola beverage composition of the invention contains soluble coffee solids in the range of 0.05% w/v to 0.50% w/v, added to a full calorie, mid calorie or no calorie cola beverage, fully or partially carbonated. According to preferred embodiments of the invention, soluble coffee solids in the range of 0.14% w/v to 0.29% w/v may be used. According to a more preferred embodiment, coffee solids in the amount of 0.14% w/v may be used.

The term "coffee solids" is used herein consistent with its ordinary meaning in the art, and nothing herein is intended to limit its meaning.

The terms "cola" and "cola beverage" are likewise used herein consistent with their ordinary meanings in the art, and nothing herein is intended to limit their meanings.

The preferred form of coffee solids according to the invention is powdered coffee solids, for example of the type produced by spray drying coffee extract according to methods known in the art. However, the invention may be accomplished using, and is therefore considered to include, any source and/or type of soluble coffee solids, provided that the amount of soluble coffee solids falls within the ranges set forth herein. The use of coffee extract, in particular, is considered to fall within the scope of the invention. However, coffee extract is less preferred as a source of soluble coffee solids because of the large amounts necessary to deliver soluble coffee solids in the amounts required by the invention. High quality coffee should be used in accordance with the invention, roasted according to taste, and may include light roast coffees, medium roast coffees, deep roast coffees, and combinations thereof.

The cola characteristics of the coffee cola beverage may be obtained by the use of cola formulations known to or within the skill of persons of ordinary skill in the art. Accordingly, typical cola formulations containing caramel color, phosphoric acid, caffeine and natural flavors may be used in accordance with the invention. Similarly, standard and accepted preservatives may be used, for example potassium sorbate, sodium benzoate and or potassium benzoate as well.

The cola formulations to which the aforementioned amounts of soluble coffee solids may be added include full calorie, mid calorie and no calorie cola beverages. The full calorie coffee cola beverage of the invention may include sugar in the range of 6.0% w/v to 11.0% w/v. According to preferred embodiment of the full calorie coffee cola beverage of the invention, sugar is used in the amount of 10.4% w/v.

The mid calorie coffee cola beverage of the invention may include sugar in reduced amounts compared with the full calorie embodiment, together with artificial sweeteners. Any artificial sweetener known to those of ordinary skill in the art may be used. According to a preferred embodiment of the mid calorie coffee cola beverage, sugar is used in the amount of 4.78% w/v, Aspartame is used in the amount of 0.0074% w/v and Acesulfame Potassium is used in the amount of 0.0074% w/v.

Table 1 lists the preferred ingredients of the full calorie coffee cola beverage and the ranges in which they may be present according to the invention, the preferred ranges in which they may be present, and the most preferred amount in which they may be present.

**Table 1: Full Calorie Coffee Cola Beverage**

| **Ingredients** | **% w/v** **Preferred range** | **% w/v** **More Preferred range** | **% w/v** **Most preferred embodiment** |
|---|---|---|---|
| Potassium Sorbate | 0.000 - 0.050 | 0.000 - 0.032 | 0.032 |
| Sodium Benzoate | 0.000 - 0.040 | 0.000 - 0.017 | 0.017 |
| Caramel Color, Phosphoric Acid, Caffeine, Natural Flavors | 0.2-0.4 | 0.25-0.35 | 0.31 |
| Aspartame | 0 | 0 | 0 |
| Acesulfame Potassium | 0 | 0 | 0 |
| Soluble Coffee Solids | 0.05 - 0.50 | 0.10 - 0.35 | 0.14 |
| Dimethylpolysiloxane | 0.0000 - 0.0010 | 0.00030-0.00090 | 0.00078 |
| Sucrose | 6.0 -11.0 | 8 -10.5 | 10.0 |
| Carbonation level | 1.5 - 4.0 volumes | 2.0 - 3.5 volumes | 3.0 volumes |

Table 2 lists the preferred ingredients of the mid calorie coffee cola beverage and the ranges in which they may be present according to the invention, the preferred ranges in which they may be present, and the most preferred amount in which they may be present.

**Table 2: Mid-Calorie Coffee Cola Beverage**

| **Ingredients** | **% w/v** **Preferred range** | **% w/v** **More Preferred range** | **% w/v** **Most preferred embodiment** |
|---|---|---|---|
| Potassium Sorbate | 0.000-0.050 | 0.000 - 0.032 | 0.032 |
| Sodium Benzoate | 0.000-0.040 | 0.000 - 0.017 | 0.017 |
| Caramel Color, Phosphoric Acid, Caffeine, Natural Flavors | 0.2-0.4 | 0.25-0.35 | 0.31 |
| Aspartame | 0.005 - 0.025 | 0.006 - 0.015 | 0.0074 |
| Acesulfame Potassium | 0.005 - 0.025 | 0.006 - 0.015 | 0.0074 |
| Soluble Coffee Solids | 0.05 - 0.50 | 0.10 - 0.35 | 0.14 |
| Dimethylpolysiloxane | 0.0000-0.0010 | 0.00030-0.00090 | 0.00078 |
| Sucrose | 2.0 - 6.0 | 3.5 - 5.5 | 4.78 |
| Carbonation level | 1.5 - 4.0 volumes | 2.0 - 3.5 volumes | 3.0 volumes |

Table 3 : lists the preferred ingredients of the zero or near zero calorie coffee cola beverage and the ranges in which they may be present according to the invention, the preferred ranges in which they may be present, and the most preferred amount in which they may be present.

**Table 3: No Calorie Coffee Cola Beverage**

| **Ingredients** | **% w/v** **Preferred range** | **% w/v** **More Preferred range** | **% w/v** **Most preferred embodiment** |
|---|---|---|---|
| Potassium Sorbate | 0.000-0.050 | 0.000 - 0.032 | 0.032 |
| Sodium Benzoate | 0.000-0.040 | 0.000 - 0.017 | 0.017 |
| Caramel Color, Phosphoric Acid, Caffeine, Natural Flavors | 0.2-0.4 | 0.25-0.35 | 0.31 |
| Aspartame | 0.010 - 0.035 | 0.018 - 0.024 | 0.0210 |
| Acesulfame Potassium | 0.005 - 0.030 | 0.010 - 0.017 | 0.0140 |
| Soluble Coffee Solids | 0.05 - 0.50 | 0.10 - 0.35 | 0.14 |
| Dimethylpolysiloxane | 0.0000-0.0010 | 0.00030-0-00090 | 0.00078 |
| Sucrose | 0 | 0 | 0 |
| Carbonation level | 1.5 - 4.0 volumes | 2.0 - 3.5 volumes | 3.0 volumes |

Each of Tables 1, 2 and 3 above list caffeine among the traditional cola elements. The total amount of caffeine may be adjusted according to the invention between 0.0100% w/v and 0.0300% w/v. The sources of such caffeine can be added separately, can come from the coffee solids alone, or a combination of both.

The following examples set forth exemplary formulations of coffee colas according to the invention.

### Example 1

| **Ingredients** | **% w/v** |
|---|---|
| Potassium Sorbate | 0.032 |
| Sodium Benzoate | 0.017 |
| Caramel Color, Phosphoric Acid, Caffeine, Natural Flavors | 0.31 |
| Aspartame | 0.00 |
| Acesulfame Potassium | 0.00 |
| Soluble Coffee Solids | 0.3 |
| Dimethylpolysiloxane | 0.00078 |
| Sucrose | 10.4 |
| Carbonation level | 3.8 volumes |

This product was prepared by adding 0.3 % w/v powdered coffee on top of a full sugar (10.4 Brix, i.e., 10,4%w/v), fully carbonated (3.8 volumes) cola beverage. This product demonstrates pleasant coffee aroma, smooth mouthfeel, and delicious coffee cola taste.

### Example 2

| **Ingredients** | **% w/v** |
|---|---|
| Potassium Sorbate | 0.032 |
| Sodium Benzoate | 0.017 |
| Caramel Color, Phosphoric Acid, Caffeine, Natural Flavors | 0.31 |
| Aspartame | 0.0074 |
| Acesulfame Potassium | 0.0074 |
| Soluble Coffee Solids | 0.29 |
| Dimethylpolysiloxane | 0.00078 |
| Sucrose | 4.78 |
| Carbonation level | 3.0 volumes |

This product was be prepared by adding 0.29% w/v powdered coffee to a cola formulation in which the sucrose content was decreased by more than half relative to Example 1 and a mixture of the artificial sweeteners Aspartame and Acesulfame Potassium was used to make up for the loss in sweetness. This product demonstrates pleasant coffee aroma, smooth mouthfeel, satisfactory foaming characteristics, and delicious coffee cola taste.

### Example 3

| **Ingredients** | **% w/v** |
|---|---|
| Potassium Sorbate | 0.032 |
| Sodium Benzoate | 0.017 |
| Caramel Color, Phosphoric Acid, Caffeine, Natural Flavors | 0.31 |
| Aspartame | 0.021 |
| Acesulfame Potassium | 0.014 |
| Soluble Coffee Solids | 0.29 |
| Dimethylpolysiloxane | 0.00078 |
| Sucrose | 0 |
| Carbonation level | 3.0 volumes |

This product may be prepared by adding 0.29% w/v powdered coffee to a cola formulation having no sucrose and only artificial sweeteners Aspartame and Acesulfame Potassium. This product also demonstrates pleasant coffee aroma, smooth mouthfeel, satisfactory foaming characteristics, and delicious coffee cola taste.

### Example 4

| **Ingredients** | **% w/v** |
|---|---|
| Potassium Sorbate | 0.032 |
| Sodium Benzoate | 0.017 |
| Caramel Color, Phosphoric Acid, Caffeine, Natural Flavors | 0.31 |
| Aspartame | 0.0074 |
| Acesulfame Potassium | 0.0074 |
| Soluble Coffee Solids | 0.14 |
| Dimethylpolysiloxane | 0.00078 |
| Sucrose | 4.78 |
| Carbonation level | 3.0 volumes |

This product was prepared by adding 0.14% w/v powdered coffee to a cola formulation in which the sucrose content was decreased by more than half relative to Example 1 and a mixture of the artificial sweeteners Aspartame and Acesulfame Potassium was used to make up for the loss in sweetness. This product demonstrates pleasant coffee aroma, smooth mouthfeel, satisfactory foaming characteristics, and delicious coffee cola taste.

### Example 5

| **Ingredients** | **% w/v** |
|---|---|
| Potassium Sorbate | 0.032 |
| Sodium Benzoate | 0.017 |
| Caramel Color, Phosphoric Acid, Caffeine, Natural Flavors | 0.31 |
| Aspartame | 0.021 |
| Acesulfame Potassium | 0.014 |
| Soluble Coffee Solids | 0.14 |
| Dimethylpolysiloxane | 0.00078 |
| Sucrose | 0 |
| Carbonation level | 3.0 volumes |

This product was prepared by adding 0.14% w/v powdered coffee to a cola formulation having no sucrose and only artificial sweeteners Aspartame and Acesulfame Potassium. This product also demonstrates pleasant coffee aroma, smooth mouthfeel, satisfactory foaming characteristics, and delicious coffee cola taste.
The foregoing examples are not intended to limit the invention, but are instead intended to merely exemplify particular embodiments within the scope of the invention as defined by the claims. The claims are intended to be construed according to their ordinary meaning, and nothing in this specification is intended to prescribe a narrower meaning to any claim term.

## Claims

1. A composition comprising:
a carbonated cola beverage;
soluble coffee solids in an amount equal to or greater than 0.05% and no greater than 0.50 w/v; and
an artificial sweetener.

2. A composition according to claim 1 wherein said soluble coffee solids are present in an amount equal to or greater than 0.10% and no greater than 0.35% w/v.

3. A composition according to claim 1 wherein said soluble coffee solids are present in an amount equal to 0.14% w/v.

4. A composition according to claim 1 wherein said artificial sweetener is selected from the group consisting of Aspartame and Acesulfame Potassium.

5. A composition according to claim 1 further comprising Aspartame in an amount equal to or greater than 0.010% w/v and no greater than 0.035% w/v.

6. A composition according to claim 1 further comprising Acesulfame Potassium in an amount equal to or greater than 0.005% w/v and no greater than 0.030% w/v.

7. A composition according to claim 5 further comprising Acesulfame Potassium in an amount equal to or greater than 0.005% w/v and no greater than 0.030% w/v.

8. A composition according to claim 7 comprising Aspartame in an amount equal to or greater than 0.018% w/v and no greater than 0.024% w/v and further comprising Acesulfame Potassium in an amount equal to or greater than 0.010% w/v and no greater than 0.017% w/v.

9. A composition according to claim 1 said composition containing no natural sweeteners.

10. A composition according to claim 8 comprising Aspartame in an amount equal to 0.021% w/v and Acesulfame Potassium in an amount equal to 0.014% w/v.

11. A composition according to claim 1 wherein said coffee solids have been added in the form of powdered coffee solids.

12. A composition according to claim 5 comprising Aspartame in an amount equal to or greater than 0.018% w/v and no greater than 0.024% w/v.

13. A composition according to claim 6 further comprising Acesulfame Potassium in an amount equal to or greater than 0.010% w/v and no greater than 0.017% w/v.

14. A composition according to claim 1 said artificial sweetener comprising Aspartame and Acesulfame Potassium.
